# EUROPEAN PATENT SPECIFICATION

(11) **EP 4 292 915 B1**
(45) Date of publication and mention of the grant of the patent: **28.08.2024**
(21) Application number: 23175985.3
(22) Date of filing: 30.05.2023
(51) Int. Cl.: B62J 9/14, B62J 1/12

(54) **STORAGE BOX BELOW SEAT OF AN STRADDLED VEHICLE**
STAUFACH UNTER DEM SITZ EINES GRÄTSCHSITZFAHRZEUGS
COFFRE DE RANGEMENT SOUS LE SIÈGE D'UN VÉHICULE À SELLE

(30) Priority: 15.06.2022 JP 2022096355
(43) Date of publication of application: 20.12.2023
(73) Proprietor: YAMAHA HATSUDOKI KABUSHIKI KAISHA, Iwata-shi, Shizuoka-ken 438-8501 (JP)
(72) Inventor: KATO, Toshiya, Iwata-shi, 4388501 (JP); SHIMADA, Taku, Iwata-shi, 4388501 (JP)
(74) Representative: Studio Torta S.p.A.

(56) References cited:
- EP-A1- 3 321 157
- EP-A1- 3 381 783
- JP-A- 2013 060 082

## Description

### Technical field

The present invention relates to a straddled vehicle including a storage box that is arranged under a seat.

### Prior Art

Hitherto, a straddled vehicle including a seat on which a rider is seated, a storage box that is arranged under the seat and that is capable of storing a helmet and the like, and a hinge that couples the seat to the storage box in a manner that allows the seat to turn has been known (refer, for example, to Japanese Patent Application Laid-open No. 2018-75971 or European Patent Application EP 3 321 157 A1 of the same family). The hinge includes a movable bracket that is attached to the seat, a fixed bracket that is fixed to the storage box through intermediation of a vehicle body frame, and a hinge shaft that couples the movable bracket and the fixed bracket to each other. The mentioned Patent Application discloses the features of the preamble of claim 1.

In such a straddled vehicle, the seat functions as a lid that opens and closes the storage box. Gaps are formed between the seat and an upper rim of the storage box, and hence ingress of rainwater and the like into the storage box through the gaps needs to be prevented. As a precaution, a sealing member is provided between the seat and the upper rim of the storage box.

In order to satisfactorily close the gaps between the seat and the upper rim of the storage box, the sealing member is preferred to be provided as extensively as possible along the upper rim of the storage box, and particularly preferred to be provided all over the upper rim of the storage box. When the sealing member is attached to an underside of the seat, the sealing member is preferred to form a loop along parts that face the upper rim of the storage box among parts on the underside of the seat. However, the movable bracket of the hinge is provided on the underside of the seat. It is difficult to attach the sealing member across a surface on the underside of the seat and the movable bracket. In order that the sealing member is arranged across the surface on the underside of the seat and the movable bracket, another component needs to be added onto the movable bracket, and the sealing member needs to be attached onto the other component.

### Description of the invention

The present invention has been made in view of such circumstances, and an object thereof is to provide a novel straddled vehicle in which a seat is supported by a hinge in a manner that allows the seat to turn relative to a storage box, and in which ingress of rainwater and the like into the storage box can be prevented with use of a sealing member to be attached to an underside of the seat.

A straddled vehicle disclosed herein includes:
a storage box;
a seat that is arranged on the storage box; and
a hinge. The hinge includes
   a movable bracket that is attached to an underside of the seat,
   a fixed bracket that is fixed to the storage box, and
   a hinge shaft that couples the movable bracket to the fixed bracket in a manner that allows the movable bracket to turn.

The straddled vehicle includes a first sealing member and a second sealing member.

The first sealing member
includes
   a first end portion and
   a second end portion, and
is attached to the movable bracket.

The second sealing member
includes
   a first end portion that faces the first end portion of the first sealing member and
   a second end portion that faces the second end portion of the first sealing member,
is attached to the underside of the seat, and
extends along an upper rim of the storage box.

The straddled vehicle includes a first cover and a second cover.

The first cover
is arranged on an outside of the storage box relative to a first boundary being a boundary between the first end portion of the first sealing member and the first end portion of the second sealing member, and
covers the first boundary.

The second cover
is arranged on the outside of the storage box relative to a second boundary being a boundary between the second end portion of the first sealing member and the second end portion of the second sealing member, and
covers the second boundary.

According to the above-described straddled vehicle, the first sealing member and the second sealing member are separate members. Thus, a single sealing member to be arranged across a surface on the underside of the seat and the movable bracket is unnecessary. Therefore, another component that allows this sealing member to be arranged across the surface on the underside of the seat and the movable bracket need not be added onto the movable bracket. Meanwhile, since the first sealing member and the second sealing member are separate members, the boundaries (the first boundary and the second boundary) are formed between the first sealing member and the second sealing member. There is a risk of ingress of rainwater and the like through these boundaries. However, the above-described straddled vehicle includes the first cover that covers the first boundary and the second cover that covers the second boundary. Thus, the ingress of rainwater and the like into the storage box can be prevented.

The straddled vehicle may further include an attachment component that is formed by integrating the first sealing member, the first cover, and the second cover with each other.

With this, the number of components can be reduced.

The attachment component may include a fitting portion that is fitted to the movable bracket.

This enables the attachment component to be attached to the movable bracket by fitting the fitting portion to the movable bracket. With this, the first sealing member can be positioned. The first sealing member can be easily attached to an appropriate position on the underside of the seat.

The attachment component may be made of rubber.

With this, sealability of the first sealing member can be enhanced. In addition, weight of the attachment component can be reduced.

The movable bracket may be attached to a front end portion of the seat.

The first cover
may be arranged in front of the first sealing member and the second sealing member, and
may overlap with the first boundary as viewed from the front.

The second cover
may be arranged in front of the first sealing member and the second sealing member, and
may overlap with the second boundary as viewed from the front.

With this, while the straddled vehicle is in motion, the ingress of rainwater, splashed mud from a road surface, and the like from the front into the first boundary and the second boundary can be satisfactorily prevented.

A lower edge of the first cover and a lower edge of the second cover may be located below a lower end of the first sealing member.

With this, the ingress of rainwater, mud, and the like from below into the first boundary and the second boundary can be satisfactorily prevented.

Entireties of the first sealing member and the second sealing member may form a loop on the underside of the seat.

This enables gaps between the seat and the storage box to be closed all over by the entireties of the first sealing member and the second sealing member. The ingress of rainwater and the like into the storage box can be satisfactorily prevented.

According to the present invention, it is possible to provide the novel straddled vehicle in which a seat is supported by a hinge in a manner that allows the seat to turn relative to a storage box, and in which ingress of rainwater and the like into the storage box can be prevented with use of a sealing member to be attached to an underside of the seat.

### Brief Description of Drawings

In the accompanying drawings:
FIG. 1 is a left side view of a motorcycle according to an embodiment of the present invention;
FIG. 2 is a left side view of a vehicle body frame, a seat, and a storage box;
FIG. 3A is a bottom view of the seat;
FIG. 3B is an enlarged view of a part IIIB in FIG. 3A;
FIG. 4A is a bottom view of the seat to which a movable bracket is attached;
FIG. 4B is an enlarged view of a part IVB in FIG. 4A;
FIG. 5A is a bottom view of the seat to which the movable bracket and an attachment component are attached;
FIG. 5B is an enlarged view of a part VB in FIG. 5A;
FIG. 6 is a partial perspective view of the seat to which the movable bracket and the attachment component are attached;
FIG. 7 is a cross-sectional view taken along a line VII-VII in FIG. 5B;
FIG. 8 is a perspective view in which the attachment component is viewed from the rear in a vehicle front-and-rear direction and from the left in a vehicle right-and-left direction;
FIG. 9 is a front view of the attachment component; and
FIG. 10 is a side view of the attachment component.

### Embodiments of the invention

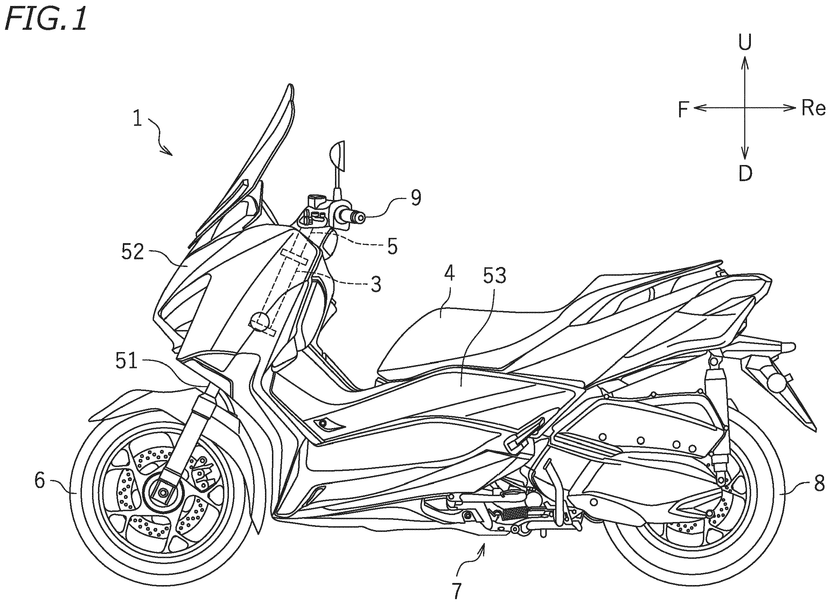

Now, an embodiment of the present invention is described with reference to the accompanying drawings. FIG. 1 is a left side view of a motorcycle 1 as an example of a straddled vehicle.

In the following description, unless otherwise noted, "front," "rear," "right," "left," "up," and "down" refer respectively to "front," "rear," "right," "left," "up," and "down" as viewed from an imaginary rider seated on a seat 4 under a state in which the motorcycle 1 without the rider or luggage thereon stationarily stands upright on a horizontal plane. The reference symbols F, Re, R, L, U, and D respectively denote the "front," the "rear," the "right," the "left," the "up," and the "down."

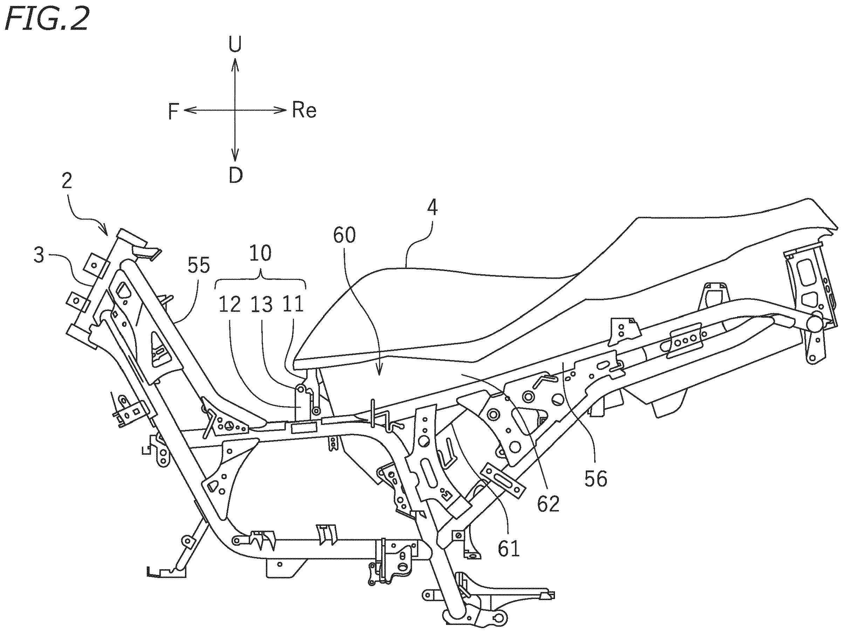

The motorcycle 1 includes a vehicle body frame 2 (refer to FIG. 2) that includes a head pipe 3, the seat 4 on which the rider is seated, a storage box 60 (refer to FIG. 2) that is arranged under the seat 4, a travelling drive source 7 that is constituted by an internal combustion engine or an electric motor, a front wheel 6, a rear wheel 8, a front cover 52, and right and left side covers 53. A steering shaft 5 is supported by the head pipe 3 in a manner that allows the steering shaft 5 to turn to the right and the left. Handle bars 9 are fixed to the steering shaft 5. In addition, a front fork 51 is fixed to the steering shaft 5. The front wheel 6 is supported by the front fork 51 in a manner that allows the front wheel 6 to rotate.

As illustrated in FIG. 2, the vehicle body frame 2 includes a main frame 55 that extends rearward from the head pipe 3, and a seat frame 56 that extends rearward from the main frame 55. The seat 4 and the storage box 60 are supported by the seat frame 56.

The storage box 60 is formed into a shape of a box opened upward. The storage box 60 has a bottom wall 61 and a peripheral wall 62 that extends upward from an outer peripheral portion of the bottom wall 61. An upper end portion of the peripheral wall 62 serves as an upper rim of the storage box 60.

The seat 4 is arranged on the storage box 60. The seat 4 is coupled to the storage box 60 with a hinge 10. The hinge 10 is connected to a front end portion of the seat 4 and a front end portion of the storage box 60. The seat 4 is turnable relative to the storage box 60. The seat 4 has a function to support the rider and a function of a lid of the storage box 60.

The hinge 10 includes a movable bracket 11 that is attached to an underside of the seat 4, a fixed bracket 12 that is provided to the vehicle body frame 2, and a hinge shaft 13 that couples the movable bracket 11 and the fixed bracket 12 to each other in a manner that allows the movable bracket 11 and the fixed bracket 12 to turn relative to each other. The seat 4 is turnable about the hinge shaft 13. When the seat 4 is closed as illustrated in FIG. 2, the storage box 60 is shut by the seat 4. In this state, the rider can be seated on the seat 4. When the seat 4 in the state illustrated in FIG. 2 is turned counterclockwise about the hinge shaft 13, an upper side of the storage box 60 is opened. In this state, items can be put into and taken out of the storage box 60. Note that, the storage box 60 is fixed to the vehicle body frame 2. Thus, the fixed bracket 12 is fixed to the storage box 60 through intermediation of the vehicle body frame 2. The fixed bracket 12 may be fixed directly to the storage box 60, or the fixed bracket 12 may be indirectly fixed as in this embodiment.

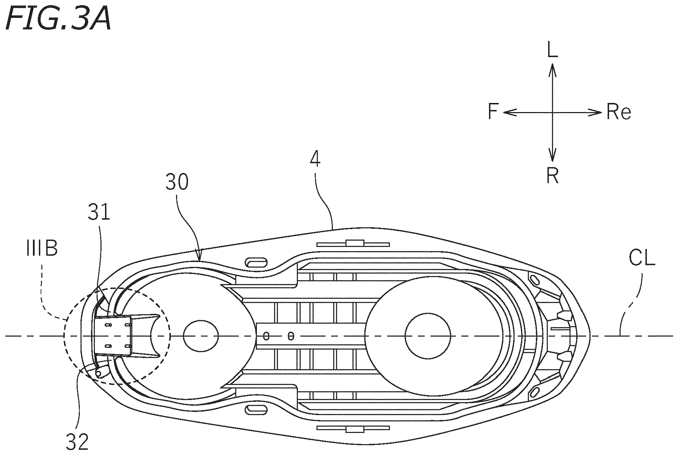

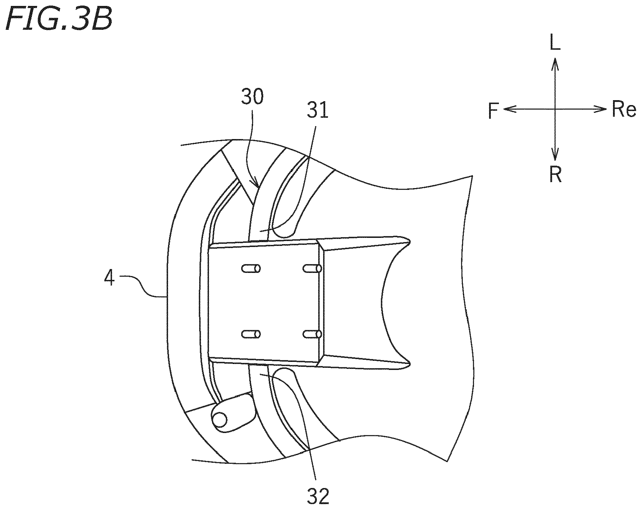

FIG. 3A is a bottom view of the seat 4. FIG. 3B is an enlarged view of a part IIIB in FIG. 3A. As illustrated in FIG. 3A, a sealing member 30 is attached to the underside of the seat 4. The sealing member 30 is formed into a strip shape. On a surface on the underside of the seat 4, the sealing member 30 is arranged at a part that faces the upper rim of the storage box 60. The sealing member 30 does not form a loop, and is discontinued at the front end portion of the seat 4. The sealing member 30 includes a first end portion 31 and a second end portion 32. The first end portion 31 and the second end portion 32 are located at the front end portion of the seat 4. The first end portion 31 is arranged on the left of a vehicle center line CL, and the second end portion 32 is arranged on the right of the vehicle center line CL. Although a material of the sealing member 30 is not limited in particular, the sealing member 30 is made of rubber in this embodiment.

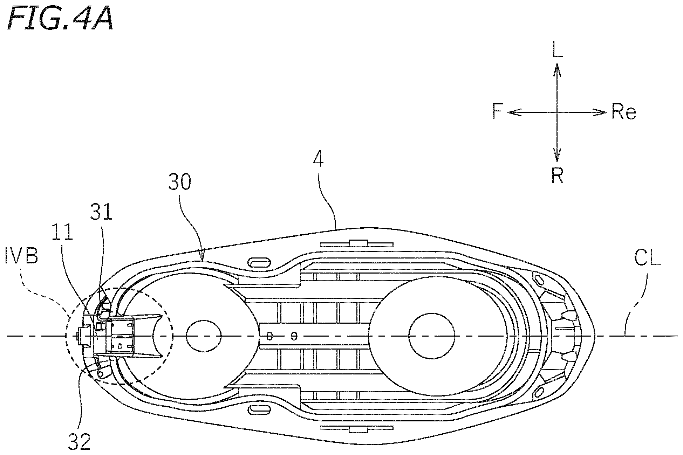

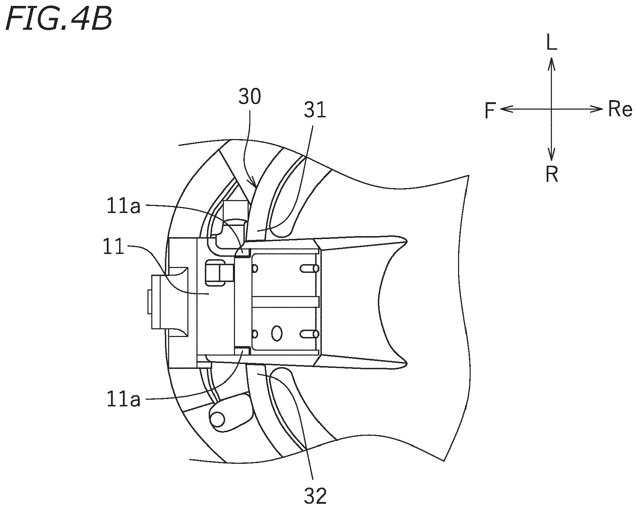

FIG. 4A is a bottom view of the seat 4 to which the movable bracket 11 is attached. FIG. 4B is an enlarged view of a part IVB in FIG. 4A. As illustrated in FIG. 4B, the movable bracket 11 is attached to the front end portion of the seat 4. A part of the movable bracket 11 is arranged between the first end portion 31 and the second end portion 32 of the sealing member 30. The sealing member 30 is not arranged over the movable bracket 11. The sealing member 30 is not provided across the movable bracket 11.

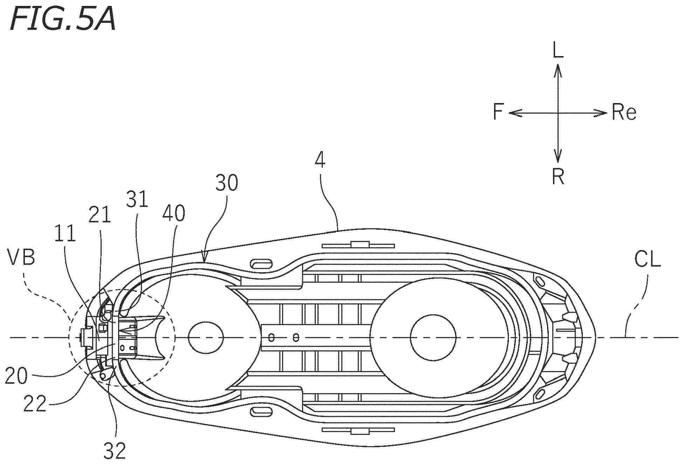

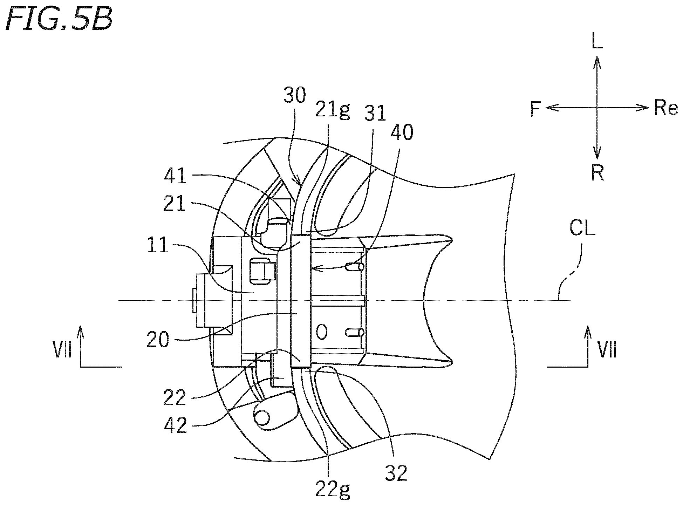

As illustrated in FIG. 5A and FIG. 5B, an attachment component 40 is attached onto the movable bracket 11. FIG. 5A is a bottom view of the seat 4 to which the movable bracket 11 and the attachment component 40 are attached. FIG. 5B is an enlarged view of a part VB in FIG. 5A. As illustrated in FIG. 5B, a part of the attachment component 40 is arranged between the first end portion 31 and the second end portion 32 of the sealing member 30.

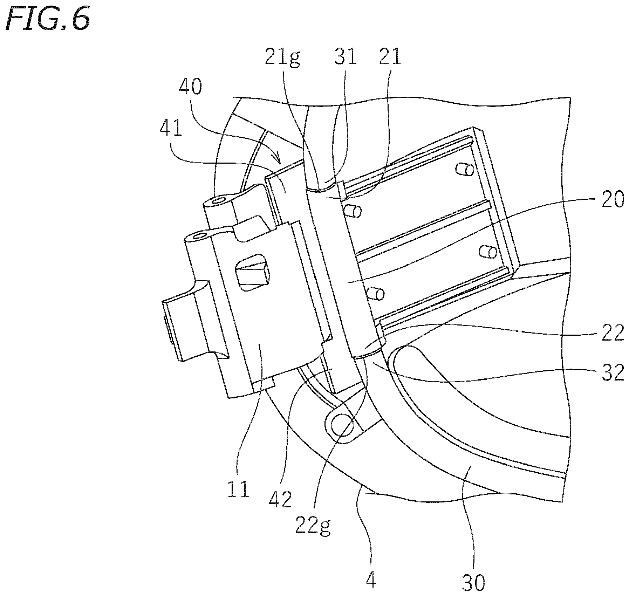

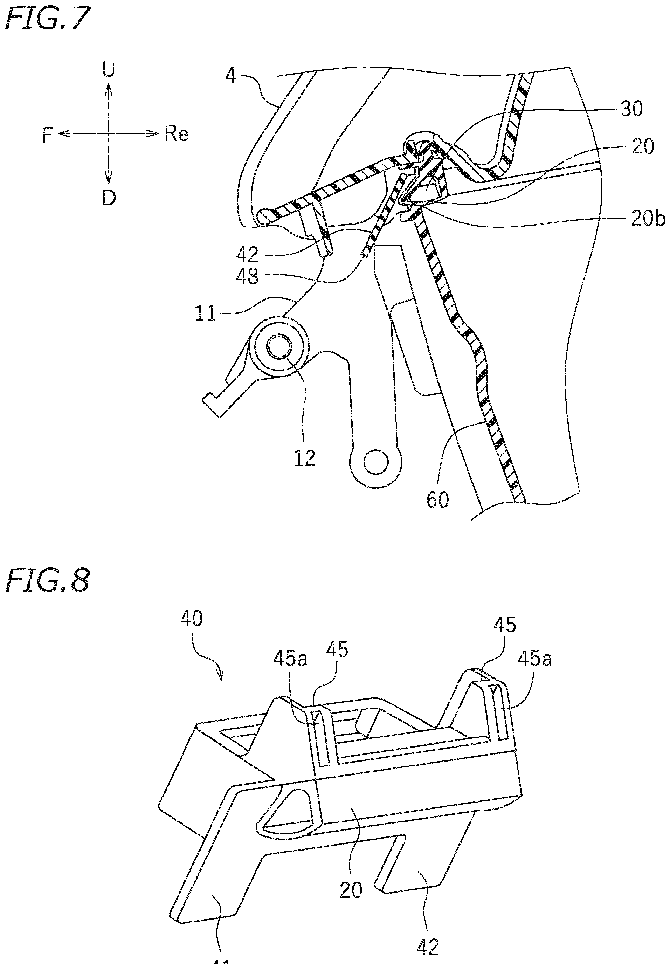

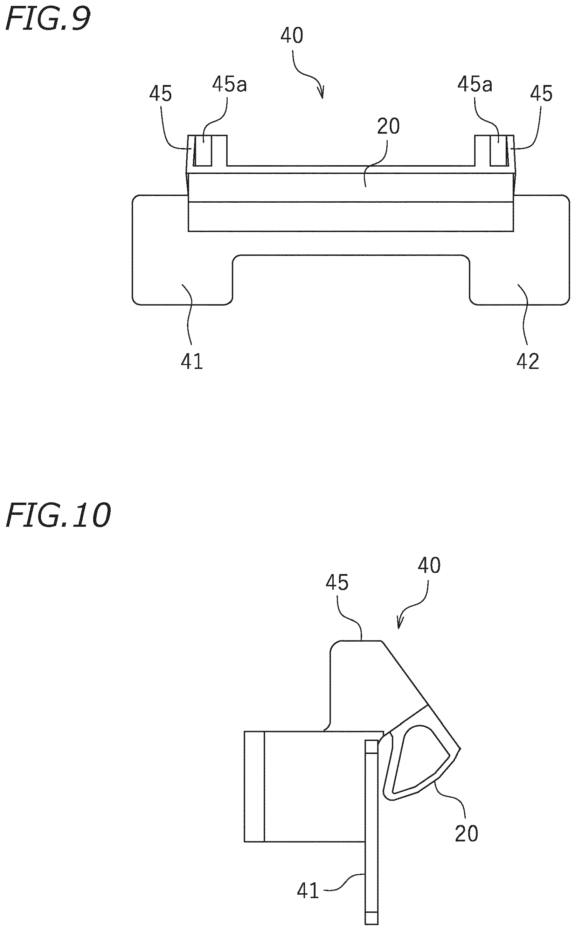

FIG. 6 is a partial perspective view of the seat 4 to which the movable bracket 11 and the attachment component 40 are attached. FIG. 7 is a cross-sectional view taken along a line VII-VII in FIG. 5B. FIG. 8 is a perspective view in which the attachment component 40 is viewed from the rear in a vehicle front-and-rear direction and from the left in a vehicle right-and-left direction. FIG. 9 is a front view of the attachment component 40, in which the attachment component 40 is viewed from the rear in the vehicle front-and-rear direction. FIG. 10 is a side view of the attachment component 40, in which the attachment component 40 is viewed from the left in the vehicle right-and-left direction. As illustrated in FIG. 8, the attachment component 40 includes a sealing member 20, a first cover 41, a second cover 42, and fitting portions 45. In this embodiment, the attachment component 40 is formed by integrating the sealing member 20, the first cover 41, the second cover 42, and the fitting portions 45 with each other. The attachment component 40 is a single component. Although a material of the attachment component 40 is not limited in particular, herein, the attachment component 40 is made of rubber.

Although a configuration of the fitting portions 45 is not limited in particular, in this embodiment, the fitting portions 45 are provided in a pair on the right and the left. As illustrated in FIG. 4B, the movable bracket 11 is provided with a pair of protrusions 11a on the right and the left. As illustrated in FIG. 9, fitting holes 45a into which the protrusions 11a are fitted are formed in the fitting portions 45. By fitting the protrusions 11a into the fitting holes 45a, the attachment component 40 is attached to the movable bracket 11, and the attachment component 40 is positioned relative to the movable bracket 11. By fitting the fitting holes 45a to the protrusions 11a, the attachment component 40 can be attached at an appropriate position on the movable bracket 11.

As illustrated in FIG. 6, the sealing member 20 includes a first end portion 21 and a second end portion 22. The first end portion 31 of the sealing member 30 faces the first end portion 21 of the sealing member 20. The second end portion 32 of the sealing member 30 faces the second end portion 22 of the sealing member 20. The first end portion 21 of the sealing member 20 is arranged on the left of the vehicle center line CL, and the second end portion 22 of the sealing member 20 is arranged on the right of the vehicle center line CL (refer to FIG. 5A). Although not shown, the sealing member 20 extends along an upper rim of the front end portion of the storage box 60. As illustrated in FIG. 5A, entireties of the sealing member 20 and the sealing member 30 form a loop on the underside of the seat 4. The entireties of the sealing member 20 and the sealing member 30 are arranged all over the upper rim of the storage box 60. As illustrated in FIG. 10, the sealing member 20 is formed into an annular shape as viewed from the side. Note that, the shape of the sealing member 20 is not limited in particular.

As illustrated in FIG. 9, the second cover 42 is arranged on the right of the first cover 41. The first cover 41 is arranged on the left of the vehicle center line CL, and the second cover 42 is arranged on the right of the vehicle center line CL (refer to FIG. 5B). Although shapes of the first cover 41 and the second cover 42 are not limited in particular, herein, the first cover 41 and the second cover 42 are each formed into a shape of a flat plate that extends in the right-and-left direction and an upward-and-downward direction.

As illustrated in FIG. 6, the sealing member 20 and the sealing member 30 are separate members. Thus, a boundary (hereinafter, referred to as a first boundary) 21g is formed between the first end portion 21 of the sealing member 20 and the first end portion 31 of the sealing member 30, and a boundary (hereinafter, referred to as a second boundary) 22g is formed between the second end portion 22 of the sealing member 20 and the second end portion 32 of the sealing member 30. The first cover 41 is arranged on an outside of the storage box 60 relative to the first boundary 21g, and covers the first boundary 21g. In this case, the first cover 41 is arranged in front of the first boundary 21g, and covers a front side of the first boundary 21g. The first cover 41 is arranged in front of the sealing member 20 and the sealing member 30, and overlaps with the first boundary 21g as viewed from the front. The second cover 42 is arranged on the outside of the storage box 60 relative to the second boundary 22g, and covers the second boundary 22g. The second cover 42 is arranged in front of the second boundary 22g, and covers a front side of the second boundary 22g. As illustrated in FIG. 7, the second cover 42 is arranged in front of the sealing member 20 and the sealing member 30, and overlaps with the second boundary 22g as viewed from the front.

As illustrated in FIG. 7, a lower edge 48 of the second cover 42 is located below a lower end 20b of the sealing member 20. Similarly, the lower edge 48 of the first cover 41 is located below the lower end 20b of the sealing member 20. In other words, the first cover 41 and the second cover 42 extend further downward than the lower end 20b of the sealing member 20. The first cover 41 extends further downward than a lower end of the first boundary 21g, and the second cover 42 extends further downward than a lower end of the second boundary 22g.

The motorcycle 1 according to this embodiment is configured as described above. Next, various advantages to be provided in this embodiment are described.

According to this embodiment, as illustrated in FIG. 2, the seat 4 is coupled to the storage box 60 by the hinge 10 in a manner that allows the seat 4 to turn. As illustrated in FIG. 5A, the sealing member 20 and the sealing member 30 are attached to the underside of the seat 4. The sealing member 20 and the sealing member 30 closes gaps between the seat 4 and the upper rim of the storage box 60. Ingress of rainwater and the like into the storage box 60 can be prevented by the sealing member 20 and the sealing member 30.

According to this embodiment, since the sealing member 20 and the sealing member 30 are separate members, a single sealing member to be arranged across the surface on the underside of the seat 4 and the movable bracket 11 is unnecessary. Thus, another component that allows this sealing member to be arranged across the surface on the underside of the seat 4 and the movable bracket 11 need not be added onto the movable bracket 11. Meanwhile, since the sealing member 20 and the sealing member 30 are separate members, the first boundary 21g and the second boundary 22g are formed between the sealing member 20 and the sealing member 30 (refer to FIG. 5B). There is a risk of the ingress of rainwater and the like through these boundaries 21g and 22g. However, the motorcycle 1 according to this embodiment includes the first cover 41 that covers the first boundary 21g and the second cover 42 that covers the second boundary 22g. Thus, the ingress of rainwater and the like into the storage box 60 can be prevented.

The sealing member 20, the first cover 41, and the second cover 42, which may be members separate from each other, are integrated with each other in this embodiment. The attachment component 40 is formed by integrating the sealing member 20, the first cover 41, and the second cover 42 with each other. The sealing member 20, the first cover 41, and the second cover 42 are formed of a single component. Thus, the number of components can be reduced.

According to this embodiment, the attachment component 40 includes the fitting portions 45 to be fitted to the movable bracket 11 (refer to FIG. 8). By fitting the fitting portions 45 to the movable bracket 11, the attachment component 40 can be attached to the movable bracket 11. With this, the sealing member 20 can be positioned. Thus, the sealing member 20 can be easily attached to an appropriate position on the underside of the seat 4.

Although the material of the sealing member 20 is not limited in particular, the sealing member 20 is made of rubber in this embodiment. With this, sealability of the sealing member 20 can be enhanced. In addition, weight of the attachment component 40 can be reduced.

In this embodiment, the hinge 10 is provided at the front end portion of the seat 4, and the seat 4 is turnable about the hinge shaft 13 that extends in the right-and-left direction (refer to FIG. 2). The movable bracket 11 is attached to the front end portion of the seat 4. The first cover 41 and the second cover 42 are arranged in front of the sealing member 20 and the sealing member 30. As viewed from the front, the first cover 41 overlaps with the boundary (first boundary) 21g between the first end portion 21 of the sealing member 20 and the first end portion 31 of the sealing member 30. As viewed from the front, the second cover 42 overlaps with the boundary (second boundary) 22g between the second end portion 22 of the sealing member 20 and the second end portion 32 of the sealing member 30. With this, the ingress of rainwater and the like from the front into the first boundary 21g and the second boundary 22g can be satisfactorily prevented. In addition, also when the motorcycle 1 in motion kicks up and splashes mud and the like on a road surface to the rear, ingress of such mud and the like into the first boundary 21g and the second boundary 22g can be satisfactorily prevented. In this way, the ingress of rainwater, mud, and the like into the storage box 60 through the first boundary 21g and the second boundary 22g can be satisfactorily prevented.

Although dimensions of the first cover 41 and the second cover 42 are not limited in particular, in this embodiment, the lower edge 48 of the first cover 41 and the lower edge 48 of the second cover 42 are located below the lower end 20b of the sealing member 20 (refer to FIG. 7). The first cover 41 and the second cover 42 extend further downward than the lower end 20b of the sealing member 20. With this, the ingress of rainwater, mud, and the like from below into the first boundary 21g and the second boundary 22g can be satisfactorily prevented.

Although the entireties of the sealing member 20 and the sealing member 30 need not necessarily form a loop on the underside of the seat 4, these entireties form a loop (refer to FIG. 5A) in this embodiment. Thus, the gaps between the seat 4 and the storage box 60 can be closed all over. With this, the ingress of rainwater, mud, and the like into the storage box 60 can be satisfactorily prevented.

Although an embodiment is described above, this embodiment is merely an example. Various other embodiments may be implemented.

In the above-described embodiment, the hinge 10 is connected to the front end portion of the seat 4, and the hinge shaft 13 extends in the right-and-left direction. The seat 4 is configured to turn to the front. However, the position of the hinge 10 and a direction in which the seat 4 turns are not limited in particular. For example, the hinge 10 may be connected to a left end portion or a right end portion of the seat 4, and the hinge shaft 13 may extend in the front-and-rear direction. In this case, the seat 4 turns to the right or the left about the hinge shaft 13.

The sealing member 20, the first cover 41, and the second cover 42 need not necessarily be integrated with each other. For example, the sealing member 20, the first cover 41, and the second cover 42 may be members separate from each other.

The attachment component 40 need not necessarily include the fitting portions 45 to be fitted to the movable bracket 11.

The lower edge 48 of the first cover 41 and the lower edge 48 of the second cover 42 need not necessarily be located below the lower end 20b of the sealing member 20.

The straddled vehicle refers to a vehicle that a rider rides by straddling the same. The straddled vehicle is not limited to the motorcycle 1. The straddled vehicle may be, for example, a motor tricycle, an ATV (All Terrain vehicle), or a snowmobile.

### Reference Signs List

- 1: motorcycle (straddled vehicle)
- 4: seat
- 10: hinge
- 11: movable bracket
- 12: fixed bracket
- 13: hinge shaft
- 20: sealing member (first sealing member)
- 21: first end portion
- 21g: first boundary
- 22: second end portion
- 22g: second boundary
- 30: sealing member (second sealing member)
- 31: first end portion
- 32: second end portion
- 40: attachment component
- 41: first cover
- 42: second cover
- 45: fitting portion
- 60: storage box

## Claims

1. A straddled vehicle (1), comprising:
a storage box (60);
a seat (4) that is arranged on the storage box (60);
a hinge (10) that includes
a movable bracket (11) that is attached to an underside of the seat (4),
a fixed bracket (12) that is fixed to the storage box (60), and
a hinge shaft (13) that couples the movable bracket (11) to the fixed bracket (12) in a manner that allows the movable bracket (11) to turn;
a first sealing member (20)
that includes
a first end portion (21) and
a second end portion (22), and
that is attached to the movable bracket (11);
**characterized in that**, the straddled vehicle further comprising:
a second sealing member (30)
that includes
a first end portion (31) which faces the first end portion (21) of the first sealing member (20) and
a second end portion (32) which faces the second end portion (22) of the first sealing member (20),
that is attached to the underside of the seat (4), and
that extends along an upper rim of the storage box (60) ;
a first cover (41)
that is arranged on an outside of the storage box (60) relative to a first boundary (21g) being a boundary between the first end portion (21) of the first sealing member (20) and the first end portion (31) of the second sealing member (30), and
that covers the first boundary (21g); and
a second cover (42)
that is arranged on the outside of the storage box (60) relative to a second boundary (22g) being a boundary between the second end portion (22) of the first sealing member (20) and the second end portion (32) of the second sealing member (30), and
that covers the second boundary (22g).

2. The straddled vehicle (1) according to Claim 1, further comprising
an attachment component (40) that is formed by integrating the first sealing member (20), the first cover (41), and the second cover (42) with each other.

3. The straddled vehicle (1) according to Claim 2,
wherein the attachment component (40) includes a fitting portion (45) that is fitted to the movable bracket (11).

4. The straddled vehicle (1) according to Claim 2 or 3,
wherein the attachment component (40) is made of rubber.

5. The straddled vehicle (1) according to any one of Claims 1 to 4,
wherein the movable bracket (11) is attached to a front end portion of the seat (4),
wherein the first cover (41)
is arranged in front of the first sealing member (20) and the second sealing member (30), and
overlaps with the first boundary (21g) as viewed from the front, and
wherein the second cover (42)
is arranged in front of the first sealing member (20) and the second sealing member (30), and
overlaps with the second boundary (22g) as viewed from the front.

6. The straddled vehicle (1) according to any one of Claims 1 to 5,
wherein a lower edge (48) of the first cover (41) and a lower edge (48) of the second cover (42) are located below a lower end (20b) of the first sealing member (20).

7. The straddled vehicle (1) according to any one of Claims 1 to 6,
wherein entireties of the first sealing member (20) and the second sealing member (30) form a loop on the underside of the seat (4) .

## Patentansprüche

1. Aufsitzfahrzeug (1), umfassend:
ein Ablagefach (60);
ein Sitz (4), der auf dem Ablagefach (60) angeordnet ist; ein Scharnier (10), das eine bewegliche Halterung (11), die an einer Unterseite des Sitzes (4) angebaut ist,
eine feste Halterung (12), der am Ablagefach (60) befestigt ist, und
eine Scharnierwelle (13), welche die bewegliche Halterung (11) so mit der festen Halterung (12) koppelt, dass sich die bewegliche Halterung (11) drehen kann, umfasst;
ein erstes Abdichtelement (20),
das
einen ersten Endabschnitt (21) und
einen zweiten Endabschnitt (22) umfasst, und
das an der beweglichen Halterung (11) angebaut ist;
**dadurch gekennzeichnet, dass** das Aufsitzfahrzeug ferner umfasst:
ein zweites Abdichtelement (30),
das
einen ersten Endabschnitt (31), der zum ersten Endabschnitt (21) des ersten Abdichtelements (20) zeigt, und
einen zweiten Endabschnitt (32), der zum zweiten Endabschnitt (22) des ersten Abdichtelements (20) zeigt, umfasst,
das an der Unterseite des Sitzes (4) angebaut ist, und
das sich entlang eines oberen Randes des Ablagefachs (60) erstreckt;
eine erste Abdeckung (41),
die an einer Außenseite des Ablagefachs (60) relativ zu einer ersten Grenze (21g), die eine Grenze zwischen dem ersten Endabschnitt (21) des ersten Abdichtelements (20) und dem ersten Endabschnitt (31) des zweiten Abdichtelements (30) ist, angeordnet ist, und welche die erste Grenze (21g) abdeckt; und
eine zweite Abdeckung (42),
die an der Außenseite des Ablagefachs (60) relativ zu einer zweiten Grenze (22g), die eine Grenze zwischen dem zweiten Endabschnitt (22) des ersten Abdichtelements (20) und dem zweiten Endabschnitt (32) des zweiten Abdichtelements (30) ist, angeordnet ist, und
welche die zweite Grenze (22g) abdeckt.

2. Aufsitzfahrzeug (1) nach Anspruch 1, ferner umfassend
eine Anbaukomponente (40), die durch Integrieren des ersten Abdichtelements (20), der ersten Abdeckung (41) und der zweiten Abdeckung (42) miteinander gebildet wird.

3. Aufsitzfahrzeug (1) nach Anspruch 2,
wobei die Anbaukomponente (40) einen Montageabschnitt (45) umfasst, der an der beweglichen Halterung (11) montiert ist.

4. Aufsitzfahrzeug (1) nach Anspruch 2 oder 3,
wobei die Anbaukomponente (40) aus Gummi besteht.

5. Aufsitzfahrzeug (1) nach einem der Ansprüche 1 bis 4,
wobei die bewegliche Halterung (11) an einem vorderen Endabschnitt des Sitzes (4) angebaut ist,
wobei die erste Abdeckung (41)
vor dem ersten Abdichtelement (20) und dem zweiten Abdichtelement (30) angeordnet ist, und
mit der ersten Grenze (21g) von vorne betrachtet überlappt, und
wobei die zweite Abdeckung (42)
vor dem ersten Abdichtelement (20) und dem zweiten Abdichtelement (30) angeordnet ist, und
mit der zweiten Grenze (22g) von vorne betrachtet überlappt.

6. Aufsitzfahrzeug (1) nach einem der Ansprüche 1 bis 5,
wobei ein unterer Rand (48) der ersten Abdeckung (41) und ein unterer Rand (48) der zweiten Abdeckung (42) unterhalb von einem unteren Ende (20b) des ersten Abdichtelements (20) angeordnet sind.

7. Aufsitzfahrzeug (1) nach einem der Ansprüche 1 bis 6,
wobei Gesamtheiten des ersten Abdichtelements (20) und des zweiten Abdichtelements (30) eine Schlaufe an der Unterseite des Sitzes (4) bilden.

## Revendications

1. Véhicule à selle (1), comprenant :
un coffre de stockage (60) ;
un siège (4) qui est disposé sur le coffre de stockage (60) ;
une charnière (10) qui inclut
une fixation mobile (11) qui est rattachée à un coté de dessous du siège (4),
une fixation fixe (12) qui est fixée au coffre de stockage (60), et
une tige de charnière (13) qui couple la fixation mobile (11) à la fixation fixe (12) de sorte qu'elle permet à la fixation mobile (11) de tourner ;
un premier élément d'étanchéité (20)
qui inclut
une première partie d'extrémité (21) et
une deuxième partie d'extrémité (22), et
qui est rattaché à la fixation mobile (11) ;
**caractérisé en ce que**, le véhicule à selle comprenant en outre :
un deuxième élément d'étanchéité (30)
qui inclut
une première partie d'extrémité (31) qui est orientée vers la première partie d'extrémité (21) du premier élément d'étanchéité (20) et
une deuxième partie d'extrémité (32) qui est orientée vers la deuxième partie d'extrémité (22) du premier élément d'étanchéité (20),
qui est rattaché à un côté de dessous du siège (4), et
qui s'étend le long d'une arête supérieure du coffre de stockage (60) ;
un premier capot (41)
qui est disposé sur un extérieur du coffre de stockage (60) par rapport à une première limite (21g) constituant une limite entre la première partie d'extrémité (21) du premier élément d'étanchéité (20) et la première partie d'extrémité (31) du deuxième élément d'étanchéité (30), et
qui couvre la première limite (21g) ; et
un deuxième capot (42)
qui est disposé sur l'extérieur du coffre de stockage (60) par rapport à une deuxième limite (22g) constituant une limite entre la deuxième partie d'extrémité (22) du premier élément d'étanchéité (20) et la deuxième partie d'extrémité (32) du deuxième élément d'étanchéité (30), et
qui couvre la deuxième limite (22g).

2. Le véhicule à selle (1) selon la revendication 1, comprenant en outre
un composant d'attache (40) qui est constitué en intégrant le premier élément d'étanchéité (20), le premier capot (41) et le deuxième capot (42) les uns avec les autres.

3. Le véhicule à selle (1) selon la revendication 2,
dans lequel le composant d'attache (40) inclut une partie de fixation (45) qui est fixée à la fixation mobile (11).

4. Le véhicule à selle (1) selon la revendication 2 ou 3, dans lequel le composant d'attache (40) est constitué de caoutchouc.

5. Le véhicule à selle (1) selon l'une quelconque des revendications 1 à 4,
dans lequel la fixation mobile (11) est rattachée à une partie d'extrémité avant du siège (4),
dans lequel le premier capot (41)
est disposé devant le premier élément d'étanchéité (20) et le deuxième élément d'étanchéité (30), et
se superpose avec la première limite (21g) telle que visualisée depuis l'avant, et
dans lequel le deuxième capot (42)
est disposé devant le premier élément d'étanchéité (20) et le deuxième élément d'étanchéité (30), et
se superpose avec la deuxième limite (22g) telle que visualisée depuis l'avant.

6. Le véhicule à selle (1) selon l'une quelconque des revendications 1 à 5,
dans lequel une arête inférieure (48) du premier capot (41) et une arête inférieure (48) du deuxième capot (42) sont situées au-dessous d'une extrémité inférieure (20b) du premier élément d'étanchéité (20).

7. Le véhicule à selle (1) selon l'une quelconque des revendications 1 à 6,
dans lequel des entièretés du premier élément d'étanchéité (20) et du deuxième élément d'étanchéité (30) constituent une boucle sur le côté de dessous du siège (4).
